(19) **Europäisches Patentamt**

**European Patent Office**

**Office européen des brevets**

(11) Veröffentlichungsnummer: **0 222 351**
**B1**

(12) **EUROPÄISCHE PATENTSCHRIFT**

(45) Veröffentlichungstag der Patentschrift: **18.07.90**

(51) Int. Cl.⁵: **F 16 F 13/00, F 16 F 9/46**

(21) Anmeldenummer: **86115507.5**

(22) Anmeldetag: **08.11.86**

(54) **Federelement mit hydraulischer Dämpfung.**

(30) Priorität: **13.11.85 DE 3540298**

(43) Veröffentlichungstag der Anmeldung:
**20.05.87 Patentblatt 87/21**

(45) Bekanntmachung des Hinweises auf die
Patenterteilung:
**18.07.90 Patentblatt 90/29**

(84) Benannte Vertragsstaaten:
**DE ES FR GB IT SE**

(56) Entgegenhaltungen:
**EP-A-0 218 202**

**PATENT ABSTRACTS OF JAPAN, Band 4, Nr.
161 (M-40)643r, 11. November 1980, Seite 164 M
40; & JP-A-55 112 440 (TOKYO SHIBAURA
DENKI K.K.) 30-08-1980**

**PATENT ABSTRACTS OF JAPAN, Band 9, Nr.
117 (M-381)1840r, 22. Mai 1985; & JP-A-60 4640
(TOYODA GOSEI K.K.) 11-01-1985**

(73) Patentinhaber: **METZELER Gesellschaft mit
beschränkter Haftung
Gneisenaustrasse 15
D-8000 München 50 (DE)**

(72) Erfinder: **Härtel, Volker, Dr.
Fichtenstrasse 50
D-8034 Germering (DE)**

(74) Vertreter: **Michelis, Theodor, Dipl.-Ing.
Gneisenaustrasse 15
D-8000 München 50 (DE)**

Courier Press, Leamington Spa, England.

## Beschreibung

Die Erfindung betrifft ein Federelement mit hydraulischer, regelbarer Dämpfung.

Bei Federelementen mit hydraulischer Dämpfung, wie sie z.B. zur Motorlagerung in Kraftfahrzeugen zur Schwingungsdämpfung eingesetzt werden, sind im allgemeinen die Dämpfungs- und Steifigkeitswerte weitgehend festgelegt durch die geometrische Gestaltung und die verwendeten Materialien. Eine Beeinflußbarkeit dieser Werte und damit eine Anpassung an wechselnde Betriebsbedingungen ist aber z.B. bei Zweikammer-Motorlagern durch Veränderung der Viskosität der hydraulischen Flüssigkeit entsprechend der DE-OS 33 36 965 durch Verwendung einer elektroviskosen Flüssigkeit und Anlegung einer Spannung an entsprechende, von der Flüssigkeit durchströmte Elektroden möglich. Hierbei ändert sich immer gleichzeitig mit der Dämpfung auch die Steifigkeit des Lagers. In einigen Fällen übertrifft die Steifigkeitsänderung die Änderung der Dämpfung erheblich.

Der vorliegenden Erfindung liegt demgegenüber die Aufgabe zugrunde, ein Federelement zu schaffen, bei dem über einen weiten Frequenzbereich die Dämpfung variabel eingestellt und insbesondere wesentlich erhöht werden kann, wohingegen die Steifigkeit weitgehend konstant bleiben soll.

Zur Lösung dieser Aufgabe ist erfindungsgemäß ein Federelement vorgesehen, bei dem innerhalb einer von einer gummielastischen Umfangswand und zwei starren Stirnwänden abgeschlossenen und mit einer elektroviskosen Flüssigkeit gefüllten Kammer ein Stapel von mindestens zwei Metallplatten angeordnet ist, die durch dazwischenliegende elastische Gummikörper auf Abstand gehalten sind, wobei sich die Endplatten des Stapels auf einer jeweiligen Stirnwand abstützen, und wobei von jedem benachbarten Plattenpaar die eine Platte an eine Spannungsquelle und die andere an Erdpotential angeschlossen sind.

Beim Einfedern eines solchen Federelementes verringert sich der Abstand zwischen den Metallplatten, so daß die in den Zwischenräumen befindliche Flüssigkeit nach außen gedrängt wird. Durch Anlegen einer Spannung an die als Elektroden wirkenden Metallplatten kann die Viskosität der Flüssigkeit geändert werden, wodurch sich auch der Strömungswiderstand und damit die Dämpfung des Federelementes ändern.

Zweckmäßigerweise sind dabei die Metallplatten kreisringförmig ausgebildet und die aufvulkanisierten Gummikörper bedecken maximal 1/3 der Oberfläche jeder Metallplatte. Dabei können die Gummikörper im Bereich des Innenumfangs der kreisringförmigen Metallplatten als geschlossener Gummiring ausgebildet sein. Weitere, im Bereich des Außenumfangs der kreisringförmigen Metallplatten angeordnete Gummikörper können kreisförmigen oder prismatischen Querschnitt aufweisen oder aber auch rippenförmig ausgebildet und radial verlaufend angeordnet sein.

Ferner können zwischen den radial außenliegenden Gummikörpern weitere Gummikörper geringerer Höhe als Endanschläge angeordnet sein. Die Gummikörper selbst sollen aus einem elektrisch isolierenden Elastomerwerkstoff geringer Materialdämpfung bestehen.

Eine optimale Wirkung ergibt sich, wenn der Abstand zweier Metallplatten 1 bis 5 mm beträgt.

Anhand einer schematischen Zeichnung sind Aufbau und Wirkungsweise eines Ausführungsbeispiels nach der Erfindung näher erläutert. Dabei zeigen

Fig. 1 einen Längsschnitt durch ein derartiges Federelement und

Fig. 2 einen Querschnitt durch ein solches Federelement entsprechend der Schnittlinie II—II nach Fig. 1.

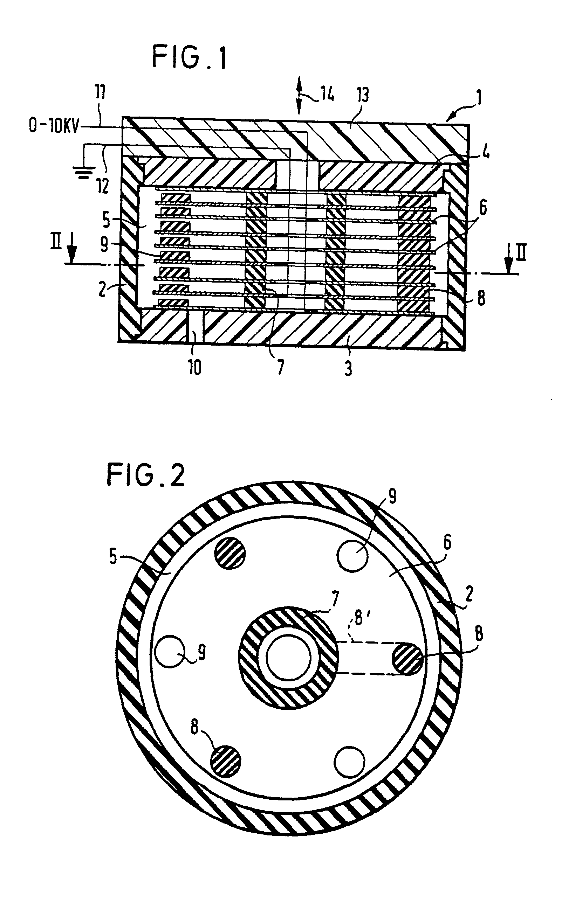

Wie aus der Zeichnung zu ersehen ist, weist das Federelement 1 ein äußeres Gehäuse auf, das aus einer zylindrischen Gummiwandung 2 und den beiden massiven Stirnwänden 3 und 4 besteht. Innerhalb der durch diese Wandungsteile abgeschlossenen Kammer 5 ist nunmehr ein Stapel von neun Metallplatten 6 angeordnet, die entsprechend dem Querschnitt nach Fig. 2 kreisscheibenförmig ausgebildet sind und einen geringeren Durchmesser als der Innendurchmesser der gummielastischen Umfangswandung 2 aufweisen.

In der Nähe des Innenumfangs dieser Metallplatten 6 sind umlaufende Gummiringe 7 angeordnet, während im Bereich des Außenumfanges dieser Metallplatten weitere kreisscheibenförmige Gummikörper 8 von gleicher Höhe wie die Gummiringe 7 vorgesehen sind. Darüberhinaus können zwischen den außenliegenden Gummikörpern 8 noch zusätzliche Gummikörper 9 geringerer Höhe angeordnet sein, die im entlasteten Zustand keine Verbindung zu den darüberliegenden Metallplatten haben. Der Abstand der Metallplatten 6 untereinander, die jeweils durch die anvulkanisierten Gummischeiben 7 bzw. Gummikörper 8 fest miteinander verbunden sind, beträgt zweckmäßigerweise etwa 1 bis 5 mm.

Die Kammer 5 ist nunmehr vollständig mit einer elektroviskosen Flüssigkeit gefüllt, die über eine verschließbare Öffnung 10 in der Stirnwand 3 eingefüllt werden kann. Die elektroviskose Flüssigkeit kann beispielsweise aus einer Mischung von etwa 40 bis 60 Gew.-% Kieselsäure als Feststoff, 30 bis 50 Gew.-% einer geeigneten, organischen Phase mit niedriger Elektrizitätskonstante, 5 bis 10 Gew.-% Wasser sowie etwa 5 Gew.-% eines Dispergiermittels bestehen und eine Grundviskosität von 100 bis 3000 mPa × s aufweisen.

Die Metallplatten 6 sind alternierend über eine Zuleitung 11 an eine nicht näher dargestellte Hochspannungsquelle von 0 bis 10 KV oder über eine Zuleitung 12 an Erdpotential gelegt. Die Zuleitungen 11 und 12 sind dabei achsial in der Kammer liegend an die Metallplatten 6 angeschlossen und über einen oberen Abschlußdeckel 13, der ebenfalls aus Kunststoff gefertigt sein kann, nach außen geführt.

Die Funktionsweise eines derartigen Federelementes ist nunmehr folgende:

Bei einer Krafteinwirkung von oben entsprechend dem Pfeil 14 wird der Stapel Metallscheiben 6 zusammengedrückt, so daß sich der Abstand zwischen den Scheiben verringert und die in den Zwischenräumen befindliche Flüssigkeit nach außen gedrängt wird. Die zwischen den Metallplatten 6 verdrängte Flüssigkeitsmenge gelangt dann beim Zusammendrücken in den ringförmigen äußeren Raum innerhalb der Umfangswandung 2, die sich beim Komprimieren nach außen auswölbt. Beim Entspannen des Federelements 1 wird die Flüssigkeit durch den äußeren Luftdruck und bei einer entsprechend volumensteifen Ausführung der Umfangswandung 2 auch durch deren Rückstellkräfte in den Raum zwischen die Metallplatten 6 zurückgedrückt.

Der Scheibenabstand und die Viskosität der Flüssigkeit bestimmen dabei den Strömungswiderstand der bei Kompression und Entspannung hin und her fließenden Flüssigkeit. Bei einer dynamischen Beanspruchung ergeben sich in einem solchen Federelement Kennlinien für die Dämpfung, die sich durch eine bemerkenswerte Unabhängigkeit der dynamischen Steifigkeit von der Frequenz der dynamischen Beanspruchung auszeichnen. Wird jetzt an das durch die Metallplatten 6 gebildete Elektrodensystem ein elektrisches Feld angelegt, so steigt die Viskosität der Flüssigkeit stark an. Dies macht sich in einem starken Anstieg der Dämpfung, gemessen als mechanischer Verlustwinkel, bemerkbar. Durch eine spezielle Ausbildung der Gummikörper 8, die beispielsweise als radiale Stege 8' ausgebildet sein können, kann dabei die Strömung und damit die Dämpfung noch weiter beeinflußt werden.

Zusätzlich können zwischen den Gummikörpern 8 noch weitere Gummikörper 9 aufvulkanisiert sein, die beispielsweise nur 2/3 der Höhe der Gummikörper 8 bzw. der Gummiringe 7 aufweisen. Ein solches Federelement hat dann bei einem Zusammendrücken um mehr als 1/3 der aktiven Federhöhe einen steilen Anstieg der Federkennlinie, da die weniger hohen Gummikörper 9 als weiche Anschläge wirken. Damit wird auch zuverlässig ein Kurzschluß zwischen den Metallplatten 6 verhindert und die maximal zulässig Feldstärke zwischen den Elektroden mechanisch begrenzt.

Zweckmäßigerweise sollen die federnden Gummikörper dabei aus einem elektrisch isolierenden Elastomerwerkstoff mit geringer Materialdämpfung gefertigt sein und maximal nur etwa 1/3 der Oberfläche der einzelnen Metallplatten 6 bedecken.

Mit der beschriebenen Ausbildung des Federelementes und der Verwendung einer elektroviskosen Flüssigkeit kann somit auf einfache Weise die Dämpfung dieses Elementes elektrisch gesteuert und kontrolliert werden, während die Steifigkeitswerte weitgehend konstant bleiben. Die Viskosität der verwendeten Flüssigkeit läßt sich dabei je nach Zusammensetzung, Grundviskosität und mechanischem Aufbau des Federelementes durch Anlegen des elektrischen Feldes um den Faktor 3 bis 1000 verändern. Bei dem dargestellten Ausführungsbeispiel ist ein Stapel von neun Metallplatten 6 verwendet worden. Es ist jedoch auch jede andere Zahl von Metallplatten zwischen 2 und etwa 20 möglich, je nach gewünschter Federwirkung und Dämpfung.

**Patentansprüche**

1. Federelement mit hydraulischer Dämpfung, dadurch gekennzeichnet, daß innerhalb einer von einer gummielastischen Umfangswand (2) und zwei starren Stirnwänden (3; 4, 13) abgeschlossenen und mit einer elektroviskosen Flüssigkeit gefüllten Kammer (5) ein Stapel von mindestens zwei Metallplatten (6) angeordnet ist, die durch dazwischenliegende elastische Gummikörper (7, 8) auf Abstand gehalten sind, wobei sich die Endplatten des Stapels (6) auf einer jeweiligen Stirnwand (3; 4) abstützen, und daß von jedem benachbarten Plattenpaar die eine Platte an eine Spannungsquelle (11) und die andere an Erdpotential (12) angeschlossen sind.

2. Federelement nach Anspruch 1, dadurch gekennzeichnet, daß die Metallplatten (6) kreisringförmig ausgebildet sind und die aufvulkanisierten Gummikörper (7, 8, 9) maximal 1/3 der Oberfläche jeder Metallplatte (6) bedecken.

3. Federelement nach Anspruch 1 oder 2, dadurch gekennzeichnet, daß der Abstand zweier Metallplatten (6) 1 bis 5 mm beträgt.

4. Federelement nach Anspruch 2, dadurch gekennzeichnet, daß die Gummikörper (7) im Bereich des Innenumfangs der kreisringförmigen Metallplatten (6) als geschlossener Gummiring ausgebildet sind.

5. Federelement nach Anspruch 4, dadurch gekennzeichnet, daß die Gummikörper (8) im Bereich des Außenumfangs der Metallplatten (6) kreisförmigen oder prismatischen Querschnitt aufweisen.

6. Federelement nach Anspruch 2, dadurch gekennzeichnet, daß die Gummikörper (8') im Bereich des Außenumfangs der Metallplatten (6) rippenförmig ausgebildet und radialverlaufend angeordnet sind.

7. Federelement nach Anspruch 5 oder 6, dadurch gekennzeichnet, daß zwischen den radial außenliegenden Gummikörpern (8, 8') weitere Gummikörper (9) geringerer Höhe als Endanschläge angeordnet sind.

8. Federelement nach Anspruch 4 bis 7, dadurch gekennzeichnet, daß die Gummikörper (7, 8, 9) aus einem elektrisch isolierenden Elastomerwerkstoff geringer Materialdämpfung bestehen.

9. Federelement nach Anspruch 1, dadurch gekennzeichnet, daß die Stirnwände (3; 4, 13) aus Kunststoff bestehen und die Durchführungen für die Spannungsleitungen (11, 12) aufnehmen.

**Revendications**

1. Elément élastique à amortissement hydraulique, caractérisé en ce que dans une chambre (5), fermée par une paroi périphérique (2) ayant l'élasticité du caoutchouc et par deux parois frontales (3; 4, 13) rigides et emplie d'un liquide électrovisqueux, est monté un empilement d'au moins deux plaques métalliques (6) qui sont maintenues à distance par des pièces élastiques en caoutchouc (7, 8) interposées entre elles, les plaques d'extrémité de l'empilement (6) s'appuyant sur une paroi frontale (3; 4) et en ce que l'une des plaques de chaque paire voisine de plaques est reliée à une source de tension (11) et l'autre au potentiel de la terre (12).

2. Elément élastique selon la revendication 1, caractérisé en ce que les plaques métalliques (6) sont en forme d'anneaux circulaires et les pièces vulcanisées en caoutchouc (7, 8, 9) recouvrent au maximum le tiers de la surface de chaque plaque métallique (6).

3. Elément élastique selon la revendication 1 ou 2, caractérisé en ce que la distance entre deux plaques métalliques (6) est comprise entre 1 et 5 mm.

4. Elément élastique selon la revendication 2, caractérisé en ce que les pièces en caoutchouc (7) sont constituées, dans la région de la périphérie intérieure des plaques métalliques (6) en forme d'anneaux circulaires, sous la forme d'anneaux de caoutchouc fermés.

5. Elément élastique selon la revendication 4, caractérisé en ce que les pièces en caoutchouc (8) ont, dans la région de la périphérie extérieure des plaques métalliques (6), une section transversale circulaire ou prismatique.

6. Elément élastique selon la revendication 2, caractérisé en ce que les pièces en caoutchouc (8') sont constituées, dans la région du pourtour extérieur des plaques métalliques (6), sous la forme de nervures et sont disposées de manière à s'étendre radialement.

7. Elément élastique selon la revendication 5 ou 6, caractérisé en ce que entre les pièces en caoutchouc (8, 8') se trouvant radialement à l'extérieur sont disposées d'autres pièces en caoutchouc (9), de hauteur plus petite et servant de butée de fin de course.

8. Elément élastique selon l'une des revendications 4 à 7, caractérisé en ce que les pièces en caoutchouc (7, 8, 9) sont en un matériau élastomère électriquement isolant, à faible amortissement propre.

9. Elément élastique selon la revendication 1, caractérisé en ce que les parois frontales (3; 4, 13) sont en matière plastique et reçoivent les traversées pour les conducteurs du courant électrique (11, 12).

## Claims

1. Suspension element with hydraulic damping, characterised in that a stack of at least two metal plates (6) is arranged inside a chamber (5), which is enclosed by a rubber elastic circumferential wall (2) and two rigid end walls (3; 4, 13) and filled with an electroviscous fluid, which plates are held apart by elastic rubber members (7, 8), which are disposed in between, the end plates of the stack (6) being supported on a respective end wall (3; 4), and that one plate of each two adjacent plates is connected to a voltage source (11) and the other to earth potential (12).

2. Suspension element according to claim 1, characterised in that the metal plates (6) are circular and the moulded-on rubber members (7, 8, 9) cover a maximum of 1/3 of the surface of each metal plate (6).

3. Suspension element according to claim 1 or 2, characterised in that the spacing of two metal plates (6) is between 1 and 5 mm.

4. Suspension element according to claim 2, characterised in that the rubber members (7) in the area of the inner circumference of the circular metal plates (6) are formed as a closed rubber ring.

5. Suspension element according to claim 4, characterised in that the rubber members (8) in the area of the outer circumference of the metal plates (6) have a circular or prismatic cross section.

6. Suspension element according to claim 2, characterised in that the rubber members (8') in the area of the outer circumference of the metal plates (6) are in the form of ribs and extend radially.

7. Suspension element according to claim 5 or 6, characterised in that further rubber members (9) of a smaller height are arranged between the radially outer rubber members (8, 8') as end stops.

8. Suspension element according to claims 4 to 7, characterised in that the rubber members (7, 8, 9) consist of an electrically non-conducting elastomer material of low material damping.

9. Suspension element according to claim 1, characterised in that the end walls (3; 4, 13) consist of a plastic material and bear the bushings for the supply lines (11, 12).

FIG.1

FIG.2